# FASCICULE DE BREVET EUROPEEN

(11) **EP 2 408 842 B1**
(45) Date de publication et mention de la délivrance du brevet: **08.05.2019**
(21) Numéro de dépôt: 10707897.4
(22) Date de dépôt: 09.03.2010
(51) Int. Cl.: C08G 69/26, C08G 69/28

(54) **PROCEDE DE FABRICATION DE POLYAMIDE**
VERFAHREN ZUR HERSTELLUNG VON POLYAMID
METHOD FOR MAKING POLYAMIDE

(30) Priorité: 20.03.2009 FR 0951779
(43) Date de publication de la demande: 25.01.2012
(73) Titulaire: Rhodia Opérations, 93306 Aubervilliers (FR)
(72) Inventeur: THIEBLEMONT, Virginie, 69390 Millery (FR); THIERRY, Jean-François, F-69340 Francheville (FR)
(74) Mandataire: Chatelan, Florence Anne
(86) Numéro de dépôt international: PCT/EP2010/052957
(87) Numéro de publication internationale: WO 2010/105939

(56) Documents cités:
- US-A- 5 306 804
- US-A- 5 432 254
- US-A- 5 723 569
- US-A1- 2009 299 028

## Description

La présente invention concerne un procédé de fabrication de polyamide.

L'invention concerne plus particulièrement un procédé de fabrication de polyamide à partir d'au moins un diacide et d'au moins une diamine, comprenant une étape de concentration d'une solution aqueuse de sel de diacide et diamine jusqu'à une concentration pondérale en sel supérieure à 85%, et une étape de polymérisation jusqu'au degré de polymérisation souhaité.

L'invention concerne en particulier un procédé discontinu (« batch ») de fabrication d'un polyamide.

Les polyamides sont des polymères présentant un intérêt industriel et commercial considérable. Les polyamides thermoplastiques sont obtenus par condensation de deux types différents de monomères ou d'un seul type de monomères. Il est envisageable d'avoir plusieurs monomères différents dans un même type.

L'invention s'applique aux polyamides issus de deux types différents de monomères, comme par exemple le poly(hexaméthylène adipamide).

Classiquement, les polyamides sont préparés à partir d'au moins un monomère diacide et d'au moins un monomère diamine, en solution dans un solvant organique ou dans un mélange de solvants organiques, dans l'eau, ou dans un système mixte solvant/eau.

Le diacide est généralement un acide dicarboxylique. Le monomère diacide le plus courant est l'acide adipique.

Quant au monomère diamine, il s'agit généralement d'hexaméthylène diamine.

Outre l'acide adipique (AA) et l'hexaméthylène diamine (HMDA), les polyamides peuvent être issus d'autres monomères diacide ou diamine même des monomères amino-acides ou des lactames (jusqu'à 25% en moles).

Le procédé industriel le plus répandu de fabrication de polyamide à partir de deux monomères différents, un diacide et une diamine, consiste à former un sel entre le diacide et la diamine : par exemple, dans le cas où le diacide est l'acide adipique et la diamine est l'hexaméthylène diamine, le sel formé est l'adipate d'hexaméthylène diammonium, plus connu sous le nom de « sel N » ou sel Nylon. La solution de sel contient généralement des quantités stoechiométriques de diacides et diamines. Par « quantités stoechiométriques » on entend des mélanges dont le rapport molaire entre le ou les diacide(s) et la ou les diamine(s) est compris entre 0,97 et 1,03, de préférence entre 0,99 et 1,01. En d'autres termes, on entend par « quantités stoechiométriques » que le rapport entre le nombre total de moles de diacide(s) et le nombre total de moles de diamine(s) est compris entre 0,97 et 1,03, de préférence entre 0,99 et 1,01. La solution de ce « sel N », qui contient au moins 50 % en poids de « sel N », est éventuellement concentrée par évaporation d'eau. Le polyamide est obtenu par chauffage, à température et pression élevées, de cette solution de « sel N », pour évaporer l'eau et activer la réaction de polymérisation, tout en maintenant le milieu à l'état liquide.

Il existe d'autres procédés partant de mélanges non stoechiométriques avec en général un fort excès de diacide par rapport à la diamine. Par exemple un tel procédé est décrit dans la demande US 4 442 260. Cependant, ce type de procédé nécessite la mise en oeuvre d'une étape supplémentaire de rétablissement de la stoechiométrie indispensable à l'obtention du polymère. Cette étape doit être réalisée à température et concentration élevées ce qui rend délicat l'ajustement du rapport molaire final.

La solution de « sel N », qui a été concentrée ou non, contient généralement entre 50 et 80% en poids de sel.

Lors de la phase de polymérisation par chauffage à température et pression élevées de la solution, il est nécessaire d'éliminer l'eau encore présente dans cette solution, ainsi que l'eau générée par la réaction de polymérisation.

La phase de polymérisation est généralement mise en oeuvre dans un « polymériseur » constitué par un autoclave. La quantité d'eau à éliminer au cours de cette phase est élevée, et l'élimination de cette eau contribue pour une part importante à la durée du cycle de polymérisation (appelée temps de cycle), limitant ainsi la productivité.

On cherche donc à réduire le temps de cycle dans l'autoclave, afin d'améliorer la productivité du procédé. En effet, l'autoclave étant un appareil coûteux et complexe, la diminution du temps de cycle dans l'autoclave représente un avantage considérable.

A cet effet l'invention propose un procédé de fabrication de polyamide à partir d'au moins un diacide et d'au moins une diamine, comprenant les étapes suivantes :
a) concentration par évaporation d'eau d'une solution aqueuse de sel de diacide et diamine obtenu par mélange d'au moins un diacide comprenant au moins 80% en mole d'acide adipique et d'au moins une diamine en quantités stoechiométriques, jusqu'à l'obtention d'une solution aqueuse homogène dont la concentration pondérale dans l'eau des espèces dissoutes est supérieure à 85%, avantageusement supérieure ou égale à 86%, de préférence supérieure ou égale à 87%, encore plus préférentiellement supérieure ou égale à 88%,
b) polymérisation avec élimination d'eau jusqu'au degré de polymérisation souhaité,
caractérisé en ce que la pression lors de l'étape a) est inférieure à 0,3 MPa, et en ce que la température θ, lors de l'étape a), est à tout instant supérieure ou égale à θc +5°C, θc étant la température d'apparition de phase solide de la solution.

Ce procédé, en concentrant de façon importante la solution de sel dans une étape de concentration par évaporation d'eau, permet de réduire le temps de cycle de l'autoclave, car la quantité d'eau à éliminer dans l'autoclave est moins élevée. Ceci conduit à l'augmentation de la productivité du procédé. En outre, dans le procédé de l'invention, la perte en diamine, c'est-à-dire la quantité entraînée en même temps que la vapeur d'eau pendant l'étape d'évaporation, reste acceptable, et l'avancement de la réaction au cours de l'étape a) est suffisamment faible pour éviter toute apparition de phase solide liée à la présence d'oligomères dans le milieu.

Selon un mode de réalisation particulier de l'invention, la concentration pondérale dans l'eau des espèces dissoutes en fin d'étape a) est supérieure à 90%.

Par espèces dissoutes, il faut comprendre l'ensemble des espèces diacides et diamines présentes dans le milieu sous forme libre ou ionisée (sel) ou autre, auxquelles on ajoute le cas échéant les monomères aminoacides ou lactames.

La solution de sel de diacide et diamine est fabriquée selon un procédé connu de l'homme du métier. Elle peut être préparée par ajout du diacide, en particulier l'acide adipique, dans la diamine, en particulier l'hexaméthylène diamine, ou l'inverse, en milieu aqueux, en évacuant ou non la chaleur produite par la réaction de neutralisation.

L'étape a) de concentration du procédé de l'invention est généralement mise en oeuvre dans un « évaporateur » , appareillage connu de l'homme du métier. Il peut s'agir par exemple d'un évaporateur statique avec échangeur de chaleur interne de type serpentin, d'un évaporateur avec une boucle de recirculation sur échangeur externe etc.

La solution, lors de l'étape a), est avantageusement maintenue sous agitation. Cela permet une bonne homogénéisation de la solution. Les moyens d'agitation sont les moyens connus de l'homme du métier ; il peut s'agir par exemple d'une agitation mécanique, ou d'une recirculation par pompe ou par thermosiphon.

La solution introduite à l'étape a) peut être une solution préchauffée.

La solution de sel, non polymérisée ou partiellement polymérisée, est avantageusement maintenue, dans l'étape a), à une température θ à tout instant suffisante pour maintenir le milieu à l'état liquide et éviter toute apparition de phase solide.

En effet, pour éviter la solidification ou la cristallisation de la solution de monomères, plus ou moins polymérisée, il est avantageux de la maintenir à une température supérieure à sa température d'apparition de phase solide à tout instant.

La température θ, lors de l'étape a), est à tout instant supérieure ou égale à θ_{c}+5°C, θ_{c} étant la température d'apparition de phase solide de la solution.

L'évaporateur de l'étape a) comprend généralement un échangeur thermique; la solution circule dans cet échangeur et est ainsi chauffée. Avantageusement l'échangeur est alimenté par de la vapeur d'eau sous pression.

La pression dans l'évaporateur lors de l'étape a) est inférieure à 0,3 MPa. Avantageusement cette pression est à tout instant suffisamment élevée pour que la condition relative à la température vue plus haut : θ supérieure ou égale à θc+5°C, soit satisfaite, de manière à éviter toute apparition de phase solide.

La pression lors de l'étape a) peut être régulée à une valeur constante, ou selon un profil de pression particulier (par exemple selon des paliers successifs).

La durée de l'étape a) de concentration est généralement comprise entre 20 et 120 minutes.

La concentration pondérale en sel de la solution aqueuse de sel de diacide et de diamine, avant l'étape a), peut varier de 40 à 70%. Elle est avantageusement comprise entre 50 et 70%.

L'étape a) de concentration est de préférence réalisée en maintenant la solution sous atmosphère exempte d'oxygène, de manière à éviter tout contact de la solution avec l'oxygène. Ceci est réalisé par exemple en mettant en oeuvre dans le procédé de l'invention un sel exempt d'oxygène dissous, ou en mettant en oeuvre une atmosphère de gaz inerte ou de vapeur d'eau générée par l'ébullition de la solution.

Le mélange issu de l'étape a), est de préférence transféré de l'évaporateur vers une enceinte réactionnelle dans laquelle se déroule l'étape b) de polymérisation avec élimination d'eau.

L'étape b) de polymérisation consiste en une polycondensation réalisée, de préférence, dans au moins un « polymériseur » constitué par un autoclave, selon les conditions habituelles du cycle de polycondensation. L'évaporateur peut alimenter plusieurs « polymériseurs ».

L'étape b) comprend au moins une étape b1) de polymérisation sous pression. La pression lors de cette étape b1) est généralement comprise entre 1,5 et 2,5 MPa.

Une autre caractéristique remarquable du procédé de l'invention est qu'il comprend au moins l'une des étapes classiques suivantes :
- une étape b2) de détente du milieu de polymérisation pour éliminer l'eau résiduelle par évaporation,
- une étape b3) de maintien en température du polymère, sous pression atmosphérique ou réduite,
- une étape b4) de mise en forme (de préférence sous forme de granulés) du polyamide obtenu.

Selon l'étape b3), le polyamide peut ensuite être maintenu pendant un temps déterminé à une température de polymérisation sous pression atmosphérique ou réduite pour obtenir le degré de polymérisation désiré.

Ces dernières étapes de finition sont celles utilisées dans les procédés industriels classiques de fabrication de polyamide à partir d'une solution aqueuse de sel de diacide et de diamine.

La durée de l'étape b) est généralement comprise entre 90 et 240 minutes. Le procédé de l'invention permet de réduire cette durée de plusieurs minutes, voire de plus d'une dizaine de minutes. Il permet également d'obtenir une quantité de polymère plus importante par cycle. En effet, pour un volume donné de réacteur, la solution obtenue après l'étape a) étant plus concentrée que dans les procédés connus, il est possible d'introduire dans l'autoclave une quantité plus élevée de monomères plus ou moins polymérisés ; on obtient donc au final une quantité de polymère plus élevée dans l'autoclave sans changer le niveau de remplissage initial de ce dernier.

Avantageusement, les appareillages du procédé de l'invention, sont munis d'une isolation thermique pour limiter les échanges de chaleur avec le milieu extérieur et ainsi limiter les pertes de chaleur.

Le procédé de l'invention est avantageusement discontinu.

Le procédé de l'invention peut être utilisé pour la fabrication de poly(hexaméthylène adipamide), à partir d'acide adipique comme monomère diacide et d'hexaméthylène diamine comme monomère diamine.

Comme monomère diacide, en plus de l'acide adipique, on peut citer également les acides glutarique, subérique, sébacique, dodécanedioïque, isophtalique, téréphtalique, azélaïque, pimélique, naphtalène dicarboxylique, 5-sulfoisophtalique par exemple. Il est possible d'utiliser un mélange de plusieurs monomères diacides.

Le monomère diacide comprend au moins 80% en mole d'acide adipique.

Comme monomère diamine, en plus de l'hexaméthylène diamine, on peut citer également l'heptaméthylène diamine, la tétraméthylène diamine, l'octaméthylène diamine, la nonaméthylène diamine, la décaméthylène diamine, la méthyl-2 pentaméthylène diamine, l'undécaméthylène diamine, la dodécaméthylène diamine, la xylylène diamine, l'isophorone diamine. Il est possible d'utiliser un mélange de plusieurs monomères diamines.

Avantageusement le monomère diamine comprend au moins 80% en mole d'hexaméthylène diamine.

On peut également mettre en oeuvre des comonomères tels que des lactames ou aminoacides, comme par exemple le caprolactame, l'acide aminocaproïque, le laurolactame etc.

Lorsque des comonomères sont utilisés, ces derniers sont ajoutés préférentiellement en mélange avec le sel de diacide et diamine de départ. Dans ce cas, les espèces dissoutes au sens de la présente invention comprennent également ces comonomères.

Des additifs peuvent être introduits au cours du procédé de l'invention. On peut citer à titre d'exemples d'additifs des nucléants comme le talc, des matifiants comme le dioxyde de titane ou le sulfure de zinc, des stabilisants chaleur ou lumière, des agents bioactifs, des agents antisalissure, des catalyseurs, des limiteurs de chaîne etc. Ces additifs sont connus de l'homme du métier. Cette liste n'a aucun caractère exhaustif.

Le polymère est généralement ensuite extrudé ou mis en forme.

Le polymère est généralement mis sous forme de granulés.

Ces granulés sont ensuite utilisés dans un grand nombre d'applications, notamment pour la fabrication de fils, fibres ou filaments, ou pour des mises en forme d'articles par moulage, injection, extrusion. Ils peuvent notamment être utilisés dans le domaine des plastiques techniques, généralement après une étape de formulation.

D'autres détails ou avantages de l'invention apparaîtront plus clairement à la vue des exemples donnés ci-dessous.

### EXEMPLES

### Exemple 1 (comparatif)

Un polyamide 6,6 est préparé à partir d'une solution aqueuse de Sel N à 52% en poids chargée dans un évaporateur à recirculation externe avec 0,20% en poids d'une solution aqueuse d'hexaméthylènediamine à 32,7% en poids, 1,6% en poids d'une solution aqueuse de caprolactame à 60% en poids, et 8,5 ppm d'antimousse (composition silicone). Le mélange est chauffé jusqu'à 153,0°C sous une pression absolue de 0,24 MPa. A la fin de l'évaporation, la concentration en espèces dissoutes de la solution est de 84,7% en poids. Cette solution est alors transférée dans un autoclave. L'autoclave est chauffé de façon à obtenir une pression autogène de 1,85 MPa. Pendant cette phase de polymérisation sous pression, une dispersion aqueuse d'oxyde de titane à 20% en poids est ajoutée en quantité telle que le polymère final contienne 0,3% en poids d'oxyde de titane. La phase de polymérisation sous pression dure 60 min, puis la pression est réduite graduellement jusqu'à la pression atmosphérique. Le réacteur est maintenu sous pression atmosphérique pendant 26 minutes et la température atteinte par la masse réactionnelle à la fin de cette étape est de 272°C. Puis le réacteur est mis sous une pression d'azote comprise entre 0,4 et 0,5 MPa pour pouvoir extruder le polymère sous forme de joncs, refroidis à l'eau et coupés de manière à obtenir des granulés.

Le polyamide 6,6 obtenu a une viscosité relative de 41 mesurée dans l'acide formique à 90%, à une concentration de 8,4% en poids; et des groupements terminaux amines de 49,2 milliéquivalents par kilogramme de polymère.

### Exemple 2 (invention)

Un polyamide 6,6 est préparé à partir d'une solution aqueuse de Sel N à 52% en poids chargée dans un évaporateur à recirculation externe avec 0,23% en poids d'une solution aqueuse d'hexaméthylènediamine à 32,7% en poids, 1,6% en poids d'une solution aqueuse de caprolactame à 60% en poids, et 8,5 ppm d'antimousse (composition silicone).

Le polyamide est préparé selon des conditions identiques à celles utilisées dans l'exemple 1, à la différence que l'on met en oeuvre une quantité de solution aqueuse de sel N supérieure de 2% en poids par rapport à la quantité mise en oeuvre dans l'exemple 1, que le mélange est chauffé jusqu'à 156,0°C lors de l'évaporation, et que la concentration en espèces dissoutes de la solution à la fin de l'évaporation est de 86,5% en poids.

L'augmentation de concentration de la solution de Sel N à la fin de la phase d'évaporation a permis d'augmenter de 2% la masse de polymère produit par cycle en conservant le même temps de cycle de l'autoclave. Le temps d'évaporation de la solution de Sel N a augmenté sans impacter le cadencement de l'atelier de production ni les temps de cycle de l'autoclave.

Le polyamide 6,6 obtenu a les mêmes propriétés que celui obtenu dans l'exemple 1 : une viscosité relative de 41 mesurée dans l'acide formique à 90%, à une concentration de 8,4% en poids; et des groupements terminaux amines de 49,4 milliéquivalents par kilogramme de polymère.

### Exemple 3 (comparatif)

Un polyamide 6,6 est préparé à partir d'une solution aqueuse de Sel N à 52% en poids chargée dans un évaporateur à recirculation externe avec 9 ppm d'antimousse (composition silicone). Le mélange est chauffé jusqu'à 154,0°C sous une pression de 0,24 MPa. A la fin de l'évaporation, la concentration en espèces dissoutes de la solution est de 85,0% en poids. Cette solution est alors transférée dans un autoclave. L'autoclave est chauffé de façon à obtenir une pression autogène de 1,85 MPa. La phase de polymérisation sous pression dure 42 min, puis la pression est réduite graduellement jusqu'à la pression atmosphérique. Le réacteur est maintenu sous pression atmosphérique pendant 20 minutes et la température atteinte par la masse réactionnelle à la fin de cette étape est de 277°C. Puis le réacteur est mis sous une pression d'azote comprise entre 0,4 et 0,5 MPa pour pouvoir extruder le polymère sous forme de joncs, refroidis à l'eau et coupés de manière à obtenir des granulés.

Le polyamide 6,6 obtenu a un indice de viscosité de 135,5 mL/g mesuré dans l'acide formique à 90%, à une concentration de 0,5 g/100mL.

### Exemple 4 (invention)

Un polyamide 6,6 est préparé dans les mêmes conditions que celles utilisées dans l'exemple 3, à la différence que le mélange est chauffé jusqu'à 157,4°C lors de l'évaporation, et que la concentration en espèces dissoutes de la solution à la fin de l'évaporation est de 87,0% en poids.

L'augmentation de concentration de la solution de Sel N à la fin de la phase d'évaporation a permis de diminuer le temps de cycle de l'autoclave de 3 min et donc d'augmenter la productivité de l'atelier. Le temps d'évaporation de la solution de Sel N n'a pas été augmenté, notamment grâce à la capacité de chauffage de l'évaporateur.

Le polyamide 6,6 obtenu a les mêmes propriétés que celui obtenu dans l'exemple 3 : un indice de viscosité de 135,3 mL/g mesuré dans l'acide formique à 90%, à une concentration de 0,5 g/100 mL.

## Revendications

1. Procédé de fabrication de polyamide à partir d'au moins un diacide et d'au moins une diamine, comprenant les étapes suivantes :
a) concentration par évaporation d'eau d'une solution aqueuse de sel de diacide et diamine obtenu par mélange d'au moins un diacide comprenant au moins 80 % en mole d'acide adipique, et d'au moins une diamine en quantités stoechiométriques, jusqu'à l'obtention d'une solution aqueuse homogène dont la concentration pondérale dans l'eau des espèces dissoutes est supérieure à 85%,
b) polymérisation avec élimination d'eau jusqu'au degré de polymérisation souhaité, comprenant au moins une étape b1) de polymérisation sous pression.
**caractérisé en ce que** la pression lors de l'étape a) est inférieure à 0,3 MPa, et **en ce que** la température θ, lors de l'étape a), est à tout instant supérieure ou égale à θ_{c}+5°C, θ_{c} étant la température d'apparition de phase solide de la solution.

2. Procédé selon la revendication 1, dans lequel l'étape a) est une étape de concentration par évaporation d'eau d'une solution aqueuse de sel de diacide et diamine obtenu par mélange d'au moins un diacide et d'au moins une diamine en quantités stoechiométriques, jusqu'à l'obtention d'une solution aqueuse homogène dont la concentration pondérale dans l'eau des espèces dissoutes est supérieure ou égale à 86%.

3. Procédé selon la revendication 1, dans lequel l'étape a) est une étape de concentration par évaporation d'eau d'une solution aqueuse de sel de diacide et diamine obtenu par mélange d'au moins un diacide et d'au moins une diamine en quantités stoechiométriques, jusqu'à l'obtention d'une solution aqueuse homogène dont la concentration pondérale dans l'eau des espèces dissoutes est supérieure ou égale à 87%.

4. Procédé selon l'une des revendications précédentes, **caractérisé en ce que** la concentration pondérale en sel de la solution aqueuse de sel de diacide et diamine, avant l'étape a), est comprise entre 50 et 70%.

5. Procédé selon l'une des revendications précédentes, **caractérisé en ce que** le mélange obtenu à l'issue de l'étape a) est transféré dans au moins un réacteur de polymérisation.

6. Procédé selon l'une des revendications précédentes, **caractérisé en ce qu'**il comprend au moins l'une des étapes suivantes :
- une étape b2) de détente du milieu de polymérisation pour éliminer l'eau résiduelle par évaporation,
- une étape b3) de maintien en température du polymère, sous pression atmosphérique ou réduite,
- une étape b4) de mise en forme du polyamide obtenu.

7. Procédé selon la revendication 6, **caractérisé en ce que** l'étape b4) est une étape de mise en forme sous forme de granulés du polyamide obtenu.

8. Procédé selon l'une des revendications précédentes, **caractérisé en ce que** le procédé est un procédé discontinu.

9. Procédé selon l'une des revendications précédentes, **caractérisé en ce que** les monomères diacides sont choisis dans la liste comprenant les acides adipique, glutarique, subérique, sébacique, dodécanedioïque, isophtalique, téréphtalique, azélaïque, pimélique, naphtalène dicarboxylique, 5-sulfoisophtalique.

10. Procédé selon l'une des revendications précédentes, **caractérisé en ce que** les monomères diamines sont choisis dans la liste comprenant l'hexaméthylène diamine, l'heptaméthylène diamine, la tétraméthylène diamine, l'octaméthylène diamine, la nonaméthylène diamine, la décaméthylène diamine, la méthyl-2-pentaméthylène diamine, l'undécaméthylène diamine, la dodécaméthylène diamine, la xylylène diamine, l'isophorone diamine.

11. Procédé selon l'une des revendications précédentes, **caractérisé en ce que** le monomère diamine comprend au moins 80 % en mole d'hexaméthylène diamine.

## Patentansprüche

1. Verfahren zur Herstellung von Polyamid ausgehend von wenigstens einer Disäure und wenigstens einem Diamin, umfassend die folgenden Schritte:
a) Konzentration, durch Verdampfen von Wasser, einer wässrigen Disäure- und Diaminsalzlösung, erhalten durch Mischen von wenigstens einer Disäure, die wenigstens 80 Mol-% Adipinsäure enthält, und von wenigstens einem Diamin in stöchiometrischen Mengen bis zum Erhalt einer homogenen wässrigen Lösung, bei der die Gewichtskonzentration der gelösten Spezies im Wasser mehr als 85 % beträgt,
b) Polymerisation mit Eliminierung von Wasser bis zu dem gewünschten Polymerisationsgrad, umfassend wenigstens einen Schritt b1) der Polymerisation unter Druck,
**dadurch gekennzeichnet, dass** der Druck im Schritt a) weniger als 0,3 MPa beträgt und dass die Temperatur θ im Schritt a) zu jedem Zeitpunkt größer oder gleich θ_{c} + 5°C ist, wobei θ_{c} die Temperatur des Auftretens der festen Phase der Lösung ist.

2. Verfahren nach Anspruch 1, wobei der Schritt a) ein Schritt der Konzentration, durch Verdampfen von Wasser, einer wässrigen Disäure- und Diaminsalzlösung ist, die durch Mischen von wenigstens einer Disäure und wenigstens einem Diamin in stöchiometrischen Mengen erhalten wird, bis eine homogene wässrige Lösung erhalten wird, bei der die Gewichtskonzentration der gelösten Spezies im Wasser mehr als oder gleich 86 % beträgt.

3. Verfahren nach Anspruch 1, wobei der Schritt a) ein Schritt der Konzentration, durch Verdampfen von Wasser, einer wässrigen Disäure- und Diaminsalzlösung ist, die durch Mischen von wenigstens einer Disäure und wenigstens einem Diamin in stöchiometrischen Mengen erhalten wird, bis eine homogene wässrige Lösung erhalten wird, bei der die Gewichtskonzentration der gelösten Spezies im Wasser mehr als oder gleich 87 % beträgt.

4. Verfahren nach einem der vorhergehenden Ansprüche, **dadurch gekennzeichnet, dass** die Salzgewichtskonzentration der wässrigen Disäure- und Diaminsalzlösung vor dem Schritt a) zwischen 50 und 70 % liegt.

5. Verfahren nach einem der vorhergehenden Ansprüche, **dadurch gekennzeichnet, dass** die nach dem Schritt a) erhaltene Lösung in wenigstens einen Polymerisationsreaktor überführt wird.

6. Verfahren nach einem der vorhergehenden Ansprüche, **dadurch gekennzeichnet, dass** es wenigstens einen der folgenden Schritte umfasst:
- einen Schritt b2) der Entspannung des Polymerisationsmediums, um das restliche Wasser durch Verdampfen zu eliminieren,
- einen Schritt b3) des Haltens der Temperatur des Polymers unter Atmosphärendruck oder vermindertem Druck,
- einen Schritt b4) des Formens des erhaltenen Polyamids.

7. Verfahren nach Anspruch 6, **dadurch gekennzeichnet, dass** der Schritt b4) ein Schritt des Formens des erhaltenen Polyamids in Granulatform ist.

8. Verfahren nach einem der vorhergehenden Ansprüche, **dadurch gekennzeichnet, dass** das Verfahren ein diskontinuierliches Verfahren ist.

9. Verfahren nach einem der vorhergehenden Ansprüche, **dadurch gekennzeichnet, dass** die Disäuremonomere aus der Liste ausgewählt werden, die Adipinsäure, Glutarsäure, Korksäure, Sebacinsäure, Dodecandisäure, Isophtalsäure, Terephtalsäure, Azelainsäure, Pimelinsäure, Naphtalindicarbonsäure, 5-Sulfoisophtalsäure umfasst.

10. Verfahren nach einem der vorhergehenden Ansprüche, **dadurch gekennzeichnet, dass** die Diaminmonomere aus der Liste ausgewählt werden, die Hexamethylendiamin, Heptamethylendiamin, Tetramethylendiamin, Octamethylendiamin, Nonamethylendiamin, Decamethylendiamin, Methyl-2-penta-methylendiamin, Undecamethylendiamin, Dodecamethylendiamin, Xylylendiamin, Isophorondiamin umfasst.

11. Verfahren nach einem der vorhergehenden Ansprüche, **dadurch gekennzeichnet, dass** das Diaminmonomer wenigstens 80 Mol-% Hexamethylendiamin umfasst.

## Claims

1. Process for manufacturing polyamide from at least one diacid and from at least one diamine, comprising the following steps:
a) concentration by evaporation of water from an aqueous solution of diacid and diamine salt obtained by mixing at least one diacid comprising at least 80 mol% of adipic acid and at least one diamine in stoichiometric quantities, until a homogeneous aqueous solution is obtained, of which the weight concentration in water of the dissolved species is greater than 85%,
b) polymerization with removal of water up to the desired degree of polymerization, comprising at least one step b1) of polymerization under pressure,
**characterized in that** the pressure during step a) is less than 0.3 MPa, and **in that** the temperature θ, during step a), is, at any moment, greater than or equal to θ_{c}+5°C, θ_{c} being the solid appearance temperature of the solution.

2. Process according to Claim 1, in which step a) is a step of concentration by evaporation of water from an aqueous solution of diacid and diamine salt obtained by mixing at least one diacid and at least one diamine in stoichiometric quantities, until a homogeneous aqueous solution is obtained, of which the weight concentration in water of the dissolved species is greater than 86%.

3. Process according to Claim 1, in which step a) is a step of concentration by evaporation of water from an aqueous solution of diacid and diamine salt obtained by mixing at least one diacid and at least one diamine in stoichiometric quantities, until a homogeneous aqueous solution is obtained, of which the weight concentration in water of the dissolved species is greater than 87%.

4. Process according to one of the preceding claims, **characterized in that** the weight concentration of salt of the aqueous solution of diacid and diamine salt, before step a), is between 50 and 70%.

5. Process according to one of the preceding claims, **characterized in that** the mixture obtained at the end of step a) is transferred into at least one polymerization reactor.

6. Process according to one of the preceding claims, **characterized in that** it comprises at least one of the following steps:
- a step b2) of expansion of the polymerization medium in order to remove the residual water via evaporation;
- a step b3) of maintaining the temperature of the polymer, under atmospheric pressure or reduced pressure; and
- a step b4) of forming the polyamide obtained.

7. Process according to Claim 6, **characterized in that** step b4) is a step of forming, in the form of granules, the polyamide obtained.

8. Process according to one of the preceding claims, **characterized in that** the process is a batch process.

9. Process according to one of the preceding claims, **characterized in that** the diacid monomers are chosen from the list comprising adipic, glutaric, suberic, sebacic, dodecanedioic, isophthalic, terephthalic, azelaic, pimelic, naphthalenedicarboxylic and 5-sulfoisophthalic acids.

10. Process according to one of the preceding claims, **characterized in that** the diamine monomers are chosen from the list comprising hexamethylenediamine, heptamethylenediamine, tetramethylenediamine, octamethylenediamine, nonamethylenediamine, decamethylenediamine, 2-methylpentamethylenediamine, undecamethylenediamine, dodecamethylenediamine, xylylenediamine and isophoronediamine.

11. Process according to one of the preceding claims, **characterized in that** the diamine monomer comprises at least 80 mol% of hexamethylenediamine.
